# EUROPEAN PATENT APPLICATION

(11) **EP 2 634 075 A1**
(43) Date of publication of application: **04.09.2013**
(21) Application number: 12466003.6
(22) Date of filing: 28.02.2012
(51) Int. Cl.: B62K 11/04, B62M 7/02

(54) **Electric motorcycle driving unit**

(71) Applicant: Fibres s.r.o., 703 00 Ostrava Vitkovice (CZ)
(72) Inventor: Leffner, Stanislav, 793 26 Vrbno pod Pradedem (CZ)
(74) Representative: Janik, Zdenek

(57) **Abstract**

An electric motorcycle driving unit that includes electric drive (2) on the rear fork of the electric motorcycle or the frame (3) of the electric motorcycle with at least one rectangular battery (11, 12) on the frame (3) of the electric motorcycle. When mounted the shorter side of the base of each battery (11, 12, 13) is cross-wise to the driving direction. Each battery (11, 12, 13) is lead or lithium and two and more batteries (11, 12, 13) can be in at least two layers one above the other. It is advantageous, if an electric drive (2) concerns an AC electric engine (21), a centrifugal clutch (24) and a case (22). The AC electric engine (21) is in the case (22) and the centrifugal clutch (24) is linked to the electric engine shaft. The AC electric engine (21) stator is in contact with the case (22). The case (22) is linked from the side attached to the centrifugal clutch (24) to the centrifugal clutch basket, which is of aluminium alloy.

## Description

### Technical field

The invention concerns a driving unit for electric-motorcycles, in particular a children's motorcycle with a frame height up to 700 mm, the driving unit of which contains an electric engine powered by batteries. The invention deals with constructing the drive, which gives the highest operability for one battery charge, while keeping the proportions usual for common adult motorcycles.

### Description of Prior Art

Motorcycles are produced for non-adult users that are smaller than usual for adult motorcycles. For most adult motorcycles the driving unit is a combustion engine for which the ratio of engine output and the weight of the engine, or the engine output and the dimensions of the engine are much higher than for electric engines. Combustion engines for driving non-adult motorcycles are not suitable for many reasons. Mainly for health reasons because in places suitable for non-adult users, the increased exhaust gas emissions and accompanying noise are undesirable. In particular, constructing smaller engines running at higher revolutions leads to higher noise. The ratio of noise intensity and the output of the engine are very unfavourable for small combustion engines. Further disadvantages of using a combustion engine to drive a non-adult motorcycle are the more complicated control and the need to use a gearbox because combustion engines have a narrow torque moment. Riding a motorcycle with a combustion engine would be unmanageable for small children or the motorcycle would have to have a more complicated construction, which would undesirably increase its price. Therefore, driving units for non-adult drivers have either a DC or AC electric engine. DC electric drives have a high torque moment at low revolutions, so means of transport with lower outputs for which DC electric engines are used do not need a gearbox or centrifugal clutch. Their disadvantages are that they are of robust construction and greater weight. For two-track vehicles for non-adult drivers with a DC engine, the same proportions as for adult motorcycles cannot be achieved without problems. Therefore, AC electric drives are used in driving units because of their more favourable ratio of output to weight and output to dimensions. AC electric drives have a lower torque moment when starting, therefore, AC driving units have a centrifugal clutch and in some cases also a gearbox. The disadvantage of using AC driving units in vehicles is that during operation at full load an amount of heat is released which needs sufficient and effective cooling. The common disadvantage of all transport with electric engines is the shorter length of running on one battery charge than the length of running of a vehicle with a combustion engine with a full fuel tank. Therefore, motor vehicle producers try to equip vehicles with maximum capacity batteries. In electric motorcycles the batteries are either under the seat or in the frame of the cycle. A 12 V rectangular cube lead battery is the most frequently used and the batteries are installed together on their longer sides. These batteries are connected in series or parallel. For children's sports electric motorcycles this is not practical because the motorcycle is heavy. The lower part of the electric motorcycle is very wide, restricting small drivers when manoeuvring. For electric motorcycles with cross-placed batteries, a proportionally balanced design cannot be created as for adult motorcycles. The possibilities are restricted for electric motorcycles for non-adult drivers. Standard lead batteries with sufficient capacity are big and the effort to place the largest in the frame leads to the electric engine being placed on the rear fork with the batteries placed in the frame cross-wise by their longest dimension. If the proportions of smaller motorcycles are to be the same as for adults, then the longitudinal direction must be used because of the available space.

### Disclosure of the invention

Above mentioned disadvantages are solved by an electric motorcycle driving unit which includes an electric drive mounted on the rear fork of the electric motorcycle or on the frame of the electric motorcycle and at least one battery, having rectangular base, which is mounted on the frame. The principle of an electric motorcycle driving unit according to the submitted invention is that when mounted, the shorter side of the base of each battery is cross-wise to the direction of driving. Alternatively, the electric drive contains an AC electric engine, a centrifugal clutch and a case, where the AC electric engine is mounted in the case and the centrifugal clutch is linked to the,shaft of the AC electric engine. Alternatively, a stator of the AC electric engine is in contact with the case and is advantageously linked to the bottom of the case. According to other alternatives, the case is linked from the side opposite to the centrifugal clutch with the basket of the centrifugal clutch and is produced from aluminium alloy. It is also advantageous if at least two batteries are located in at least two layers, one above the other and if they are lead or lithium. Alternatively the length of the frame is maximally 700 mm.

The advantage of placing the batteries in the frame according to this invention is that the capacity of the batteries can be increased while the width of the driving unit can be kept to the usual proportions of an adult combustion motorcycle. The advantage of using an AC electric drive is that it is lighter and smaller with the same output despite the fact that in addition to the AC electric engine it also contains a centrifugal clutch and cooling case to prevent overheating. The AC electric engine can be located in the frame together with the batteries without decreasing battery capacity while keeping the width of the driving unit the same as the usual proportions of an adult combustion engine motorcycle. The driving unit as a whole is lighter and simpler to construct than currently used driving units and gives sufficient output for a non-adult electric motorcycle while retaining the proportions of an adult motorcycle.

### Description of the drawings

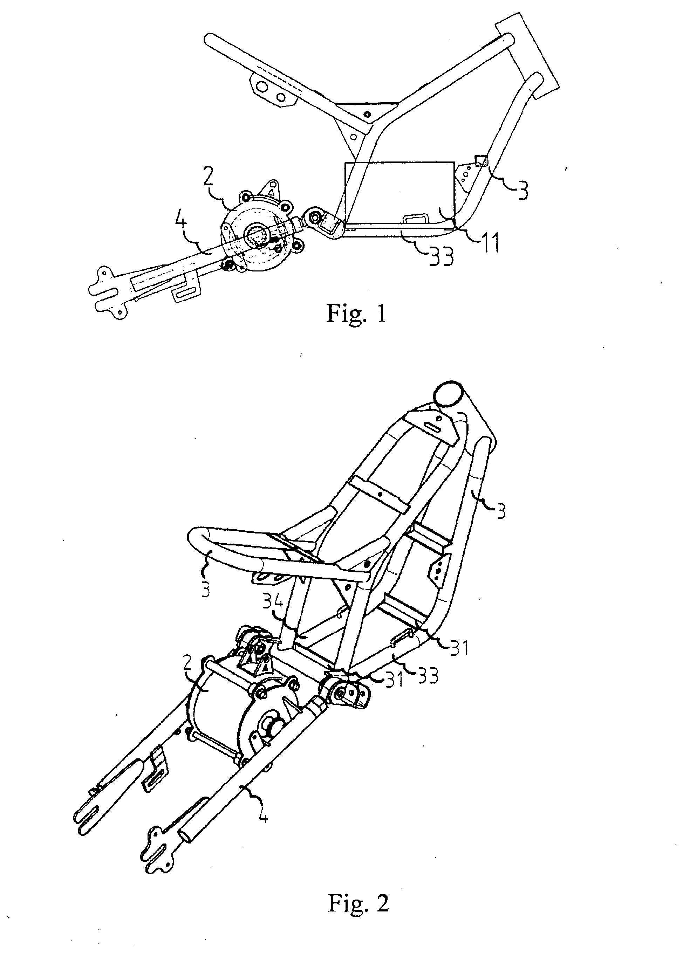

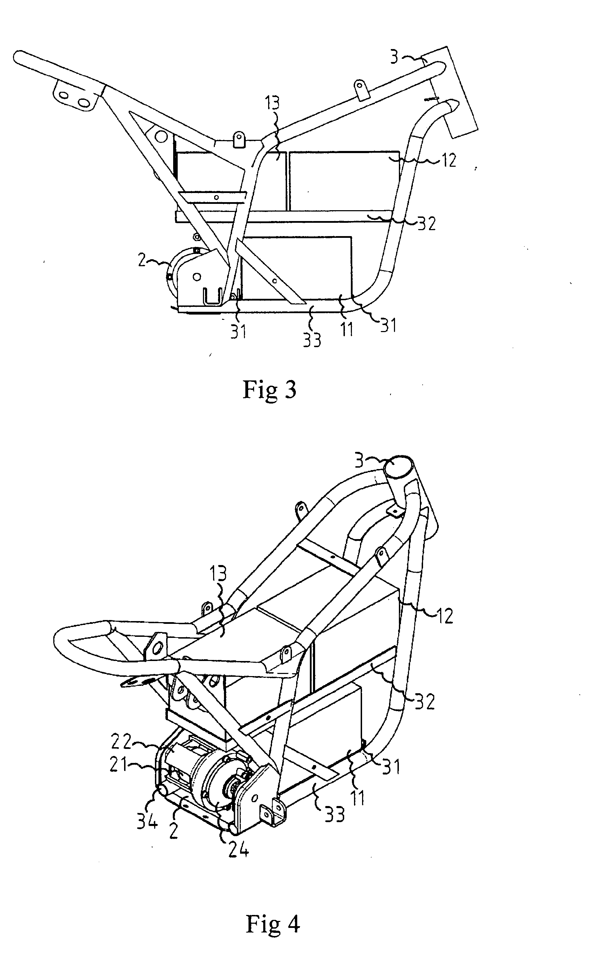

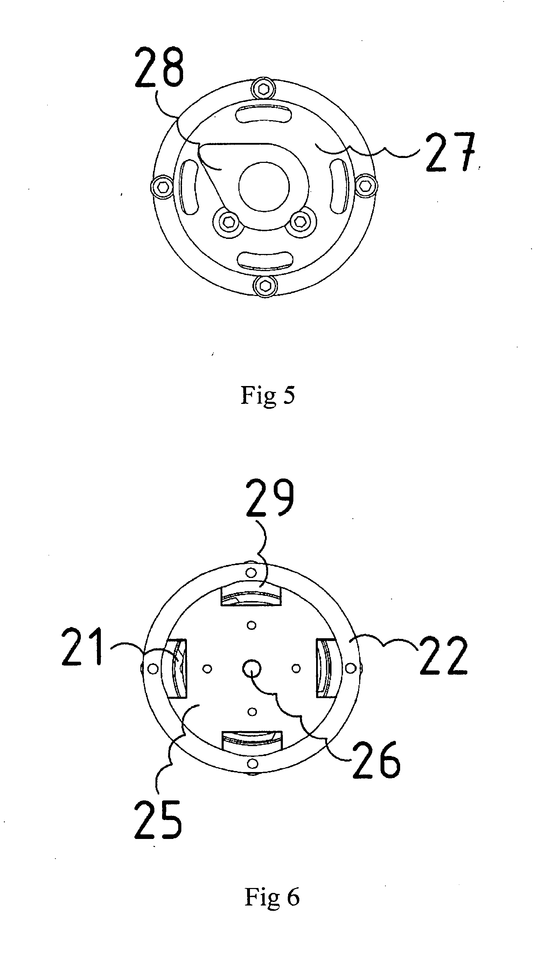

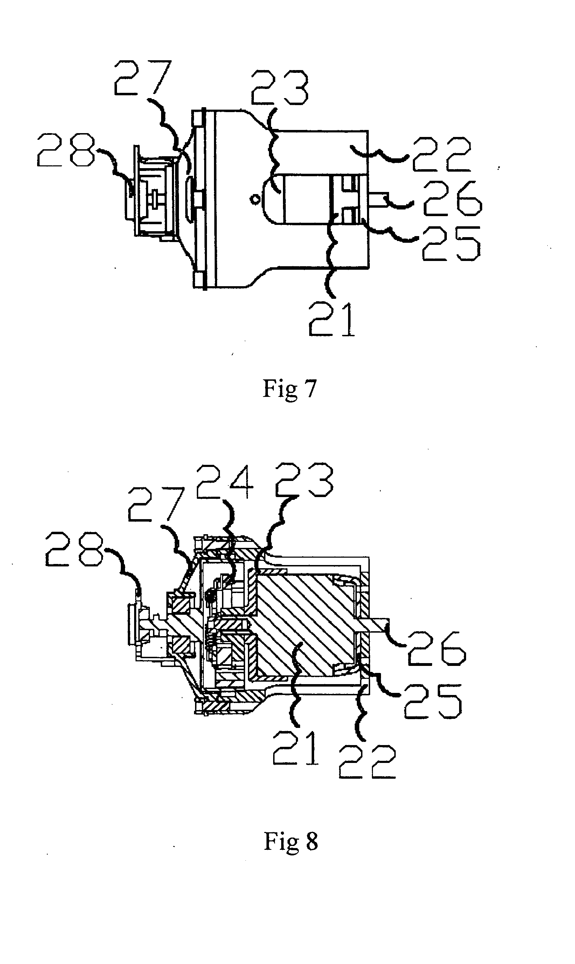

Figures 1 and 2 show an example construction according to example 1, where Figure 1 shows the side view of the electric motorcycle frame and Figure 2 shows the angle view of the same part. Figures 3, 4, 5, 6, 7 and 8 show an example construction according to example 2, where Figure 3 shows the side view of the electric motorcycle frame and Figure 4 shows an angle view of the same part. Figures 5, 6, 7 and 8 show the driving unit and Figure 5 shows the front view of the centrifugal clutch, Figure 6 shows front view of the case, Figure 7 shows the side view and Figure 8 the longitudinal cross-section.

### Examples of Embodiments

### Example 1

An electric motorcycle driving unit construction according to this example consists of one battery 11 mounted in the frame 3, which is according to this example, closed frame 3 and the electric drive 2, which is mounted on the rear fork 4, tilting linked with the actual part of the closed frame 3. The electric drive 2 consists of an electric engine 21, which is according to this example a DC electric engine 21, linked by a chain to the electric motorcycle rear wheel. The height of the closed frame 3 does not exceed 700 mm, so it is an electric motorcycle for non-adults. The battery 11, which is lithium, is a cube with a rectangular base. The length of the base of the battery 11 is 1.5x greater than the width. The battery 11 is in the closed frame 3, with a slight forward declination and the shorter side of the base of the battery 11, i.e. its width is cross-wise to the driving direction and the longer side of the base, i.e. its length is in the driving direction. The battery 11 is on the cross bars 31, linking the lower part 33 of the right side tube and the lower part 34 of the left side tube of the closed frame 3.

### Example 2

An electric motorcycle driving unit construction according to this example differs from the example construction of example 1 in that it contains three lead batteries 11, 12, 13 and also because the electric drive 2 is in the frame 3, which is according to this example, closed frame, and contains an electric engine 21, which is according to this example, AC electric engine 21. Each battery 11, 12, 13 is a cube with a rectangular base. The length of the base of each battery 11, 12, 13 is 2x greater than its width. The batteries 11, 12, 13 are in the closed frame 3 in two layers one above the other and the shorter side of the base of each battery 11, 12, 13, i.e. its width is cross-wise to the driving direction and the longer side of the base, i.e. its length, is in the driving direction. The first battery 11 is in the first layer from the ground and is on the cross bars 31, linking the lower part 33 of the right side tube and the lower part 34 of the left side tube of the closed frame 3. The second battery 12 and the third battery13 are in the second layer from the ground in tandem and the longer sides of the bases of both batteries 12, 13, i.e. their lengths, are in the driving direction, i.e. longitudinally to the closed frame 3. The shorter sides of the bases of batteries 12, 13, i.e. their widths, are cross-wise to the driving direction. The second and the third batteries 12, 13 are mounted on the longitudinal bed 32, linked to the right and left side and the rear tube of the closed frame 3. The electric drive 2 is in the closed frame 3, beside the first battery 11, on the side, attached to the rear wheel. The electric drive 2 contains an AC electric engine 21, a centrifugal clutch 24 and the case 22. The AC electric engine 21 is in the case 22, which according to this example construction is a protective and cooling case. The centrifugal clutch 24 is in the clutch basket 27. On the clutch basket 27 a coupling plate 28 of the clutch drum shaft is mounted. The clutch drum shaft has a toothed wheel, which is through a non-displayed chain linked to the rear wheel of the electric motorcycle. The centrifugal clutch 24 is linked to the shaft 26 of the AC electric engine 21. The stator of the AC electric engine 21 is on the side opposite the centrifugal clutch 24 and is linked to the bottom 25 of the case 22. From the side of centrifugal clutch 24 the stator of the AC electric engine has a cover 23 of the rotor winding which is a flange and prevents dirt penetrating from the centrifugal clutch 24 into the rotor of the AC electric engine 21. The case 22 has four ventilation holes 29 and is linked from the side to the centrifugal clutch 24 by the clutch basket 27. The case 22 is of aluminium alloy and also collects heat from the AC electric engine 21, during operation and also prevents dirt entering the AC electric engine 21.

### Industrial applicability

The use of the electric drive according to the invention is mainly for electric-bicycles and electric-motor transport. It is also suitable for driving model cars and large-scale motorcycles and scooters and toys driven by electricity that require output and low weight.

## Claims

1. The electric motorcycle driving unit, which includes an electric drive (2), mounted on the rear fork (4) of an electric motorcycle or on the frame (3) of an electric motorcycle and at least one battery (11, 12, 13), having rectangular base, which is mounted on the frame (3) of the electric motorcycle, **characterized in that**, when mounted, the shorter side of the base of each battery (11, 12, 13) is cross-wise to the driving direction.

2. The electric motorcycle driving unit according to the claim 1 **characterized in that**, the electric drive (2) contains an AC electric engine (21), a centrifugal clutch (24) and a case (22), where the AC electric engine (21) is mounted in the case (22) and the centrifugal clutch (24) is linked to the shaft (26) of the electric engine (21) and in the process the stator of AC electric drive (21) is in contact with the case (22).

3. The electric motorcycle driving unit according to claim 2 **characterized in that**, the stator of the AC electric engine (21) is linked to the bottom (25) of the case (22).

4. The electric motorcycle driving unit according to claim 2 **characterized in that**, the case (22) is linked from the side opposite to the centrifugal clutch (24) with the clutch basket (27) of the centrifugal clutch (24).

5. The electric motorcycle driving unit according to claim 2 **characterized in that**, the case (22) is a cooling and/or protective case (22) of aluminium alloy.

6. The electric motorcycle driving unit according to claim 1 **characterized in that**, at least two batteries (11, 12, 13) are located in at least two layers, one above the other.

7. The electric motorcycle driving unit according to claim 1 **characterized in that** the battery (11, 12, 13) is lead or lithium.

8. The electric motorcycle driving unit according to the claim 1 **characterized in that**, the height of the frame (3) is not more than 700 mm.
